# EUROPEAN PATENT APPLICATION

(11) **EP 2 388 286 A2**
(43) Date of publication of application: **23.11.2011**
(21) Application number: 11004134.0
(22) Date of filing: 18.05.2011
(51) Int. Cl.: C08G 77/12, C08G 77/20, C08L 83/04

(54) **Silicone rubber composition**

(30) Priority: 19.05.2010 JP 2010115406
(71) Applicant: Shin-Etsu Chemical Co., Ltd., Tokyo (JP)
(72) Inventor: Oishi, Kazuhiro, Annaka-shi Gunma-ken (JP); Yamazaki, Toshio, Annaka-shi Gunma-ken (JP)
(74) Representative: Peters, Hajo

(57) **Abstract**

Provided is a silicone rubber composition including: (A) 100 parts by mass of an organopolysiloxane with a polymerization degree of not less than 100 represented by an average composition formula (1): R¹ₐSiO_{(4-a)/2} (in which R¹ represents identical or different unsubstituted or substituted monovalent hydrocarbon groups, and a represents a positive number within a range from 1.95 to 2.05), (B) 3 to 70 parts by mass of a reinforcing silica having a BET specific surface area of not less than 50 m²/g, (C) a cyclic organopolysiloxanesilazane represented by a general formula (2): (R²R³SiO)_{b}(R⁴R⁵SiNH)_{c} (in which R² to R⁵ each independently represents an unsubstituted or substituted monovalent hydrocarbon group of 1 to 8 carbon atoms, b is an integer of 1 to 100, and c is an integer of 1 to 100, although the (R²R³SiO) units and (R⁴R⁵SINH) units may be arranged randomly and b+c is an integer of 3 to 200), (D) water, and (E) a curing agent. The silicone rubber composition yields a cured product having excellent compression set characteristics.

## Description

### BACKGROUND OF THE INVENTION

### 1. Field of the Invention

The present invention relates to a silicone rubber composition that yields a cured product having excellent compression set characteristics.

### 2. Description of the Prior Art

Low molecular weight organopolysiloxanes having silanol groups within the molecular structure are useful as dispersants for silica during the production of silicone rubber compounds, and are in widespread use. The efficacy of these types of organopolysiloxanes as dispersants is proportional to the hydroxyl group content, and therefore it is thought that if a polysiloxane having a large hydroxyl group content per unit of mass, namely a linear organopolysiloxane of comparatively low molecular weight having silanol groups at both terminals, is used as the dispersant, then the amount added of the dispersant can be kept to a minimum, which is also more effective in terms of the workability of the silicone rubber compound.

The silica dispersants used during the production of silicone rubber compounds are not limited to linear organopolysiloxanes of comparatively low molecular weight having silanol groups at both terminals, and silazane compounds having a silylating action can also be used. Examples of silazane compounds that are widely used conventionally are limited to monofunctional disilazanes in which three organic groups are bonded to each silicon atom, such as hexamethyldisilazane and 1,3-divinyl-1,1,3,3-tetramethyldisilazane, and difunctional cyclosilazanes in which two organic groups are bonded to each silicon atom, such as 1,1,3,3,5,5-hexamethylcyclotrisilazane and 1,1,3,3,5,5,7,7-octamethylcyclotetrasilazane. In other words, the vast majority of these silazane compounds effect silylation of the silica surface via a single silicon atom, and a silazane compound that treats the surface of the silica with an organopolysiloxane has been unknown until now.
[Non-Patent Document 1]
   B. B. Bvonstra et al., Rubber Chem. Tech., 48, 558 (1975)
[Non-Patent Document 2]
   Silicone Handbook, edited by Kunio Ito, pp. 291 to 293 (first published August 31, 1990 by Nikkan Kogyo Shimbun, Ltd.)

### SUMMARY OF THE INVENTION

In recent years, there have been strong demands for silicone rubber cured products to exhibit satisfactory compression set characteristics. However, it has proven impossible to obtain cured products having satisfactory compression set characteristics from silicone rubber compositions comprising, as the dispersant, either a linear organopolysiloxane of comparatively low molecular weight having silanol groups at the terminals, or a conventional silazane compound. The present invention has been developed in light of these circumstances, and has an object of providing a silicone rubber composition that yields a cured product having excellent compression set characteristics.

As a result of intensive investigation aimed at achieving the above object, the inventors of the present invention discovered that by converting the terminal functional groups within an above-mentioned linear organopolysiloxane that functions as a silica dispersant from silanol groups to highly reactive silazane groups and subsequently performing a cyclization, and then using the resulting cyclic silazane compound in combination with water, the reactivity between the dispersant and the surface silanol groups on the silica filler could be improved. The inventors also discovered that this improved reactivity enabled the preparation of a silicone rubber composition containing a silica that had been efficiently surface-treated with the organopolysiloxane, and that this silicone rubber composition yielded a cured product having excellent compression set characteristics.

Accordingly, a first aspect of the present invention provides:
a silicone rubber composition comprising:
   (A) 100 parts by mass of an organopolysiloxane with a polymerization degree of not less than 100, represented by an average composition formula (1) shown below: 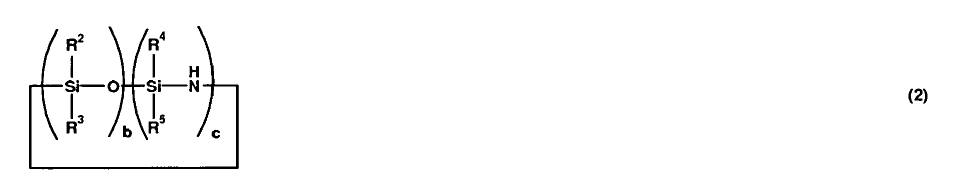 (wherein R¹ represents identical or different unsubstituted or substituted monovalent hydrocarbon groups, and a represents a positive number within a range from 1.95 to 2.05),
   (B) 3 to 70 parts by mass of a reinforcing silica having a BET specific surface area of not less than 50 m²/g,
   (C) a cyclic organopolysiloxanesilazane represented by general formula (2) shown below: 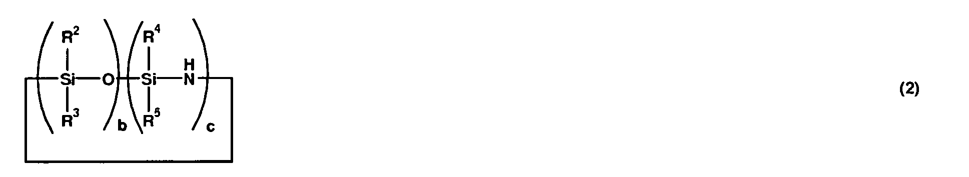 (wherein R² to R⁵ each independently represents an unsubstituted or substituted monovalent hydrocarbon group of 1 to 8 carbon atoms, b is an integer of 1 to 100, and c is an integer of 1 to 100, although the (R²R³SiO) units and (R⁴R^{S}SiNH) units may be arranged randomly, and b+c is an integer of 3 to 200),
   (D) water, and
   (E) a curing agent.

A second aspect of the present invention provides a cured product obtained by curing the above silicone rubber composition.

A third aspect of the present invention provides a method of reducing the compression set of a cured product of a silicone rubber composition comprising the above-mentioned component (A), component (B) and component (E), the method comprising preparing and then curing a silicone rubber composition comprising the above components (A) to (E).

A fourth aspect of the present invention provides the use of the above-mentioned component (C) and component (D) for reducing the compression set of a cured product of a silicone rubber composition comprising the above component (A), component (B) and component (E).

By using a cyclic organopolysiloxanesilazane in combination with water as a silica dispersant, the silicone rubber composition of the present invention is able to form a cured product having excellent compression set characteristics.

### DETAILED DESCRIPTION OF THE PREFERRED EMBODIMENTS

A more detailed description of the present invention is provided below. In this description, the term "halogen atom" describes a fluorine atom, chlorine atom, bromine atom or iodine atom, or a combination of two or more of these atoms.

### [Component (A)]

The component (A) is an organopolysiloxane with a polymerization degree of not less than 100, represented by the average composition formula (1) shown below:

R¹ₐSiO_{(4-a)/2} (1)

(wherein R¹ represents identical or different unsubstituted or substituted monovalent hydrocarbon groups, and a represents a positive number within a range from 1.95 to 2.05).

In the above average composition formula (1), the number of carbon atoms within an R¹ group is preferably within a range from 1 to 12, and more preferably from 1 to 8. Specific examples of R¹ include alkyl groups such as a methyl group, ethyl group, propyl group, butyl group, hexyl group or octyl group, cycloalkyl groups such as a cyclopentyl group or cyclohexyl group, aryl groups such as a phenyl group or tolyl group, aralkyl groups such as a benzyl group or 2-phenylethyl group, and groups in which some or all of the hydrogen atoms within one of these groups have been substituted with a halogen atom or a cyano group or the like, such as a chloromethyl group, chloropropyl group, trifluoropropyl group (and particularly a 3,3,3-trifluoropropyl group) or 2-cyanoethyl group. Above all, R¹ is preferably a methyl group, vinyl group, phenyl group or trifluoropropyl group, and particularly preferably a methyl group or vinyl group.

In the average composition formula (1), a is a positive number within a range from 1.95 to 2.05, preferably from 1.98 to 2.02, and more preferably from 1.99 to 2.01.

The polymerization degree of the organopolysiloxane of the component (A) is typically not less than 100, and is preferably within a range from 100 to 100,000, and more preferably from 3,000 to 20,000. In this description, the "polymerization degree" or "average polymerization degree" refers to the weight-average polymerization degree, which is calculated from the polystyrene-equivalent weight-average molecular weight measured by gel permeation chromatography (GPC) analysis.

The organopolysiloxane of component (A) preferably contains two or more aliphatic unsaturated groups such as alkenyl groups or cycloalkenyl groups (and particularly vinyl groups) within each molecule. In these cases, 0.01 to 20 mol% of all the R¹ groups are preferably aliphatic unsaturated groups. These aliphatic unsaturated groups may be bonded solely to silicon atoms at the molecular chain terminals, solely to silicon atoms at non-terminal positions within the molecular chain, or may also be bonded to both these types of silicon atoms, but are preferably bonded to at least the silicon atoms at the molecular chain terminals.

Although the molecular structure of the component (A) may be a linear, cyclic or branched structure, the component (A) is basically a linear diorganopolysiloxane. Either a single material may be used as the component (A), or two or more materials that differ in terms of molecular weight (polymerization degree), molecular structure, or both molecular weight and molecular structure may be used in combination.

Specific examples of the component (A) include organopolysiloxanes in which the main chain is composed solely of repeating dimethylsiloxane units, and organopolysiloxanes in which a portion of these repeating dimethylsiloxane units are substituted with diphenylsiloxane units, methylphenylsiloxane units, methylvinylsiloxane units or methyl-3,3,3-trifluoropropylsiloxane units or the like which contain at least one phenyl group, vinyl group or 3,3,3-trifluoropropyl group or the like, namely, organopolysiloxanes composed of dimethylsiloxane units together with diphenylsiloxane units, methylphenylsiloxane units, methylvinylsiloxane units, methyl-3,3,3-trifluoropropylsiloxane units, or a combination of two or more of these other units. Further, in these organopolysiloxanes, the molecular chain terminals are preferably blocked with triorganosiloxy groups such as trimethylsiloxy groups, dimethylphenylsiloxy groups, dimethylhydroxysiloxy groups, dimethylvinylsiloxy groups, methyldivinylsiloxy groups or trivinylsiloxy groups.

Examples of particularly preferred organopolysiloxanes include methylvinylpolysiloxanes with both molecular chain terminals blocked with triorganosiloxy groups, methylphenylvinylpolysiloxanes with both molecular chain terminals blocked with triorganosiloxy groups, and methyl-3,3,3-trifluoropropylvinylpolysiloxanes with both molecular chain terminals blocked with triorganosiloxy groups. Specific examples of the triorganosiloxy groups include the groups listed above.

The organopolysiloxane of the component (A) can be obtained, for example, by performing a (co)hydrolysis-condensation of one (or two or more) organohalosilanes, or by performing a ring-opening polymerization of a cyclic polysiloxane such as a trimer or tetramer cyclosiloxane using an alkaline or acidic catalyst.

### [Component (B)]

The reinforcing silica of the component (B), which has a BET specific surface area of not less than 50 m²/g, is added to the composition of the present invention in order to obtain a rubber composition that yields a cured product having excellent mechanical strength. The BET specific surface area of the silica is preferably within a range from 100 to 300 m²/g. If the BET specific surface area is less than 50 m²/g, then there is a possibility that the mechanical strength of the cured product may be insufficient. Examples of the reinforcing silica used for the component (B) include fumed silica and precipitated silica.

The amount added of the reinforcing silica of the component (B) is typically within a range from 3 to 70 parts by mass, and preferably 10 to 50 parts by mass, per 100 parts by mass of the organopolysiloxane of the component (A). An amount of less than 3 parts by mass is insufficient, and achieving a reinforcing effect from the component (B) becomes problematic. In contrast, if the amount added exceeds 70 parts by mass, then the workability of the silicone rubber compound tends to be prone to deterioration, and there is a possibility that the mechanical strength of the cured product may also deteriorate. The component (B) may be either a single material or a combination of two or more different materials.

### [Component (C)]

The component (C) is a cyclic organopolysiloxanesilazane represented by general formula (2) shown below: 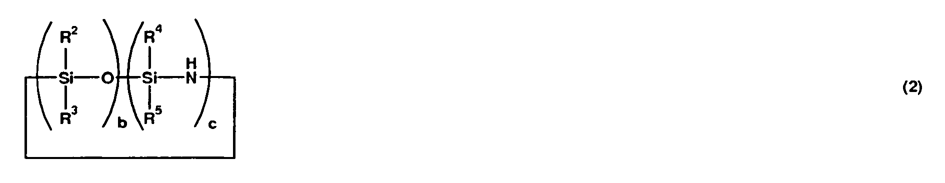 (wherein R² to R⁵ each independently represents an unsubstituted or substituted monovalent hydrocarbon group of 1 to 8 carbon atoms, b is an integer of 1 to 100, and c is an integer of 1 to 100, although the (R²R³SiO) units and (R⁴R^{S}SiNH) units may be arranged randomly, and b+c is an integer of 3 to 200).

The component (C) has no dispersant effect when used by itself, but when combined with the water of component (D), exhibits a superior dispersant effect for the reinforcing silica of the component (B). The component (C) may be either a single compound or a combination of two or more different compounds.

In the above general formula (2), the number of carbon atoms within each of R² to R⁵ is typically within a range from 1 to 8, and preferably from 1 to 6. Specific examples of R² to R⁵ include alkyl groups such as a methyl group, ethyl group, propyl group, isopropyl group or butyl group, alkenyl groups such as a vinyl group or allyl group, aryl groups such as a phenyl group or tolyl group, and groups in which some or all of the hydrogen atoms bonded to carbon atoms within one of these groups have been substituted with a halogen atom or a cyano group or the like, such as a chloromethyl group, chloropropyl group, 3,3,3-trifluoropropyl group or 2-cyanoethyl group. Of these, a methyl group, 3,3,3-trifluoropropyl group or vinyl group is preferred.

In general formula (2), b is typically an integer of 1 to 100, and is preferably from 1 to 50, more preferably from 1 to 30, still more preferably from 1 to 20, and most preferably from 1 to 10. c is typically an integer of 1 to 100, and is preferably from 1 to 50, more preferably from 1 to 30, still more preferably from 1 to 20, and most preferably from 1 to 10. However, the value of b+c is typically an integer within a range from 3 to 200, and is preferably from 3 to 100, more preferably from 3 to 60, still more preferably from 4 to 40, and most preferably from 4 to 20.

The amount added of the cyclic organopolysiloxanesilazane of the component (C) is preferably within a range from 0.1 to 50 parts by mass, more preferably from 0.5 to 30 parts by mass, and still more preferably from 1 to 20 parts by mass, per 100 parts by mass of the organopolysiloxane of the component (A). Provided the amount added of the component (C) is within the range from 0.1 to 50 parts by mass, no problems tend to arise during mixing of the composition raw materials, and the resulting composition can be effectively prevented from returning to a plastic state, is unlikely to develop tack, exhibits good workability, and is preferred in terms of resource conservation and economic viability.

The cyclic organopolysiloxanesilazane of the component (C) can be produced, for example, by two different types of production methods (hereinafter referred to as production method 1 and production method 2), each of which includes (a) a ring-opening synthesis reaction step, and (b) a silazanation reaction step.

In the first production method:
(a) a cyclic organopolysiloxane represented by general formula (21) shown below: 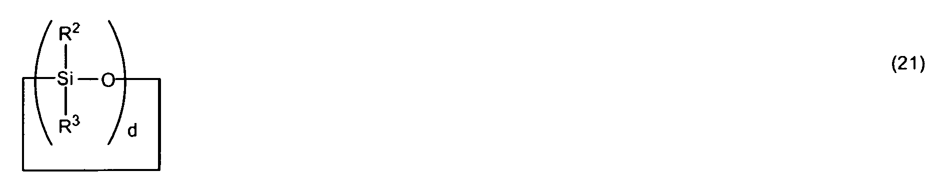 (wherein R² and R³ are the same as defined above, and d is an integer that satisfies 3≤d≤100),
   and a dialkyldihalosilane represented by general formula (22) shown below: 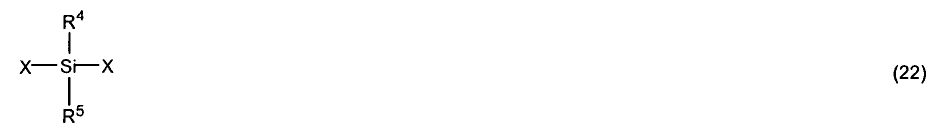 (wherein R⁴ and R⁵ are the same as defined above, and X represents a halogen atom)
   are reacted in the presence of a strong acid catalyst, in a reaction that results in ring-opening of the cyclic organopolysiloxane represented by general formula (21), thereby synthesizing a linear polyorganosiloxane with both molecular chain terminals blocked with halogen atoms, and
(b) the obtained reaction mixture comprising the linear polyorganosiloxane with both molecular chain terminals blocked with halogen atoms is diluted by adding a solvent, thereby dissolving the linear polyorganosiloxane, and excess ammonia is then passed through the obtained reaction liquid to effect a silazanation, thus producing the cyclic organopolysiloxanesilazane of the component (C).

Usually, a subsequent purification is conducted by removing by-product salts by filtration, and then removing the solvent by heating under reduced pressure.

With the exception of using a Lewis base instead of the strong acid catalyst in the above-mentioned step (a), the production method 2 of the present invention is basically the same as the production method 1, excluding minor details.

### - (a) Ring-opening Synthesis Reaction -

In general formulas (21) and (22), R², R³, R⁴ and R⁵ are the same as defined above.

d is an integer that satisfies 3≤d≤100, preferably satisfies 3≤d≤50, more preferably satisfies 3≤d≤30, still more preferably satisfies 3≤d≤20, and most preferably satisfies 3≤d≤10.

X represents a halogen atom such as a chlorine atom, bromine atom or iodine atom, and is most preferably a chlorine atom.

In the above reaction that results in ring-opening, the polymerization degree of the resulting cyclic organopolysiloxanesilazane represented by the above formula (2) and the values of b and c in formula (2) are determined by the molar ratio between the cyclic organopolysiloxane represented by formula (21) and the dialkyldihalosilane represented by formula (22).

In terms of the ring-opening reaction catalyst, a strong acid is used in the production method 1, whereas a Lewis base is used in the production method 2.

### - Catalyst: Strong Acid

Conventional acids can usually be used as the strong acid, and although there are no particular limitations, typical examples include concentrated sulfuric acid, trifluoromethanesulfonic acid, methanesulfonic acid, concentrated nitric acid, hydrochloric acid, p-toluenesulfonic acid, trifluoroacetic acid, trichloroacetic acid, dichloroacetic acid, aluminum chloride and boron trifluoride diethyl ether complex, and of these, concentrated sulfuric acid is preferred. If the ring-opening of the cyclic organopolysiloxane represented by formula (21) is performed using an acid having an acidity that is too high, then an intramolecular cyclization may occur prior to the reaction with the dialkyldihalosilane, meaning the linear polyorganosiloxane with both molecular chain terminals blocked with halogen atoms is not produced. In contrast, if the acidity of the acid catalyst is too low, then the ring-opening reaction of the cyclic organopolysiloxane represented by formula (21) tends to slow.

In those cases where a strong acid is used, although there are no particular limitations on the amount added of the strong acid, the amount is typically within a range from approximately 0.001 to 100 mass%, and preferably from 0.05 to 70 mass%, relative to the combined mass of the cyclic organopolysiloxane represented by formula (21) and the dialkyldihalosilane represented by formula (22).

The ring-opening reaction using an above-mentioned strong acid may be conducted, for example, at room temperature (namely, 25°C±10°C) for a reaction time of approximately 2 to 48 hours, and preferably 5 to 24 hours.

In order to prevent the hydrogen halide such as hydrogen chloride that is generated during the reaction from being released outside the system, the reaction vessel is preferably either a sealed system or a pressurized vessel.

### - Catalyst: Lewis Base

Conventional compounds can usually be used as the Lewis base, and although there are no particular limitations, typical examples include hexamethylphosphoric triamide (HMPA), pyridine-N-oxide, 2,6-dichloropyridine-N-oxide, 4-dimethylaminopyridine-N-oxide, dimethylsulfoxide, dimethylformamide, 1,3-dimethyl-2-imidazolidinone and 1,3-dimethyl-3,4,5,6-tetrahydro-2(1H)-pyrimidinone. HMPA is preferred from the viewpoints of reaction time and product purity, but because HMPA is a carcinogenic substance and can therefore not be used industrially, 1,3-dimethyl-3,4,5,6-tetrahydro-2(1H)-pyrimidinone is preferred.

In those cases where a Lewis base is used, although there are no particular limitations on the amount added of the Lewis base, the amount is typically within a range from approximately 0.001 to 100 mass%, and preferably from 0.05 to 70 mass%, relative to the combined mass of the cyclic organopolysiloxane represented by formula (21) and the dialkyldihalosilane represented by formula (22).

The ring-opening reaction using an above-mentioned Lewis base may be conducted, for example, at room temperature (namely, 25°C±10°C) for a reaction time of approximately 5 to 72 hours, and preferably 7 to 48 hours.

### - (b) Silazanation Reaction -

There are no particular limitations on the diluting solvent used when conducting the silazanation reaction, and conventional solvents can usually be used. Specific examples of the diluting solvent include hexane, heptane, octane, nonane, decane, undecane, dodecane, toluene, xylene, tetrahydrofuran, diethyl ether, cyclopentyl methyl ether, acetonitrile, dichloromethane, dichloroethane, chloroform, acetone and methyl ethyl ketone, and of these, heptane and toluene are preferred. If the solvent boiling point is too low, then the solvent tends to volatilize when the ammonia gas is passed through the reaction liquid, whereas if the boiling point is too high, then separation of the solvent from the produced cyclic silazane becomes problematic.

The silazanation reaction may be conducted, for example, in an ice bath (namely, 0°C±10°C) or at room temperature (namely, 25°C±10°C), by passing ammonia gas through the reaction liquid for a period of approximately 10 minutes to 24 hours, preferably 30 minutes to 12 hours, and more preferably 1 to 6 hours.

Following this silazanation reaction, the reaction mixture is usually stirred under heat (for example, 40 to 100°C, and preferably 50 to 80°C) to volatilize the excess ammonia gas, subsequently cooled to room temperature, and then filtered to remove by-product salts.

Moreover, following the above filtration operation, the solvent and any neutral by-products such as ammonium salts are usually removed by heating under reduced pressure.

### [Component (D)]

There are no particular limitations on the water of the component (D), and examples include ion-exchanged water, distilled water, tap water, or combinations of two or more of these water sources. Ion-exchanged water is preferred. When preparing the composition of the present invention, the water of component (D) may be used as a stand-alone component, or the reinforcing silica of the component (B) may be subjected to preliminary humidity conditioning under saturated water vapor conditions so that the water is incorporated within the reinforcing silica.

The amount added of the water of component (D) is preferably within a range from 0.1 to 20 parts by mass, more preferably 0.5 to 10 parts by mass, and still more preferably 1 to 5 parts by mass, per 100 parts by mass of the organopolysiloxane of the component (A). Provided the amount of added water is within the range from 0.1 to 20 parts by mass, the dispersant effect of the cyclic organopolysiloxanesilazane of the component (C) can be realized satisfactorily, and the operation of removing the water by distillation doe not become too onerous.

### [Component (E)]

There are no particular limitations on the curing agent of the component (E), provided it is capable of curing the component (A), although conventional materials typically used as silicone rubber curing agents, such as (E1) organic peroxides, (E2) combinations of an organohydrogenpolysiloxane and a hydrosilylation catalyst, or (E3) combinations of a component (E1) and a component (E2), are preferred.

### - Component (E1)

Examples of the organic peroxides of the above-mentioned component (E1) include benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate, and 1,6-hexanediol-bis-t-butyl peroxycarbonate. The component (E1) may employ a single compound or a combination of two or more different compounds. The amount added of the component (E1) is preferably within a range from 0.1 to 15 parts by mass, and more preferably from 0.2 to 10 parts by mass, per 100 parts by mass of the component (A).

### - Component (E2)

The above-mentioned component (E2) is a curing agent used for cross-linking formation via an addition reaction. Within the component (E2), the hydrosilylation catalyst is a catalyst which, in those cases where the component (A) contains aliphatic unsaturated groups (such as alkenyl groups or diene groups bonded to silicon atoms), causes an addition reaction between these aliphatic unsaturated groups and the silicon atom-bonded hydrogen atoms (SiH groups) in the organohydrogenpolysiloxane contained within the component (E2). This hydrosilylation catalyst may be either a single material or a combination of two or more different materials.

Examples of the hydrosilylation catalyst include platinum group metal-based catalysts, which include simple platinum group metals and compounds of these metals. Any of the materials conventionally used as catalysts for addition reaction-curable silicone rubber compositions can be used as the hydrosilylation catalyst. Specific examples of the hydrosilylation catalyst include microparticulate platinum metal adsorbed to a carrier such as silica, alumina or silica gel, platinic chloride, chloroplatinic acid, alcohol solutions of chloroplatinic acid hexahydrate, as well as palladium catalysts and rhodium catalysts, although of these, platinum metal or a platinum compound is preferred. The amount added of the catalyst need only be a catalytically effective amount, namely an amount sufficient to enable effective acceleration of the addition reaction. Calculated as a mass of the platinum group metal relative to the mass of the component (A), the amount of the catalyst is typically within a range from 1 ppm to 1% by mass, and preferably from 10 to 500 ppm. Provided the amount is within this range from 1 ppm to 1% by mass, the addition reaction can be accelerated satisfactorily, resulting in adequate curing, and the reactivity can be controlled in accordance with the amount of added catalyst, which prevents over-addition of the catalyst and is therefore desirable economically in terms of resource conservation.

In addition to the catalyst described above, an addition cross-linking reaction retarder may also be used to control the curing rate. Specific examples of this reaction retarder include ethynylcyclohexanol and 1,3,5,7-tetramethyl-1,3,5,7-vinyltetrasiloxane.

Within the above-mentioned component (E2), the organohydrogenpolysiloxane preferably contains two or more SiH groups (typically 2 to 300), and more preferably three or more SiH groups (for example, 3 to 200, and preferably approximately 4 to 100) within each molecule. These SiH groups may be bonded solely to silicon atoms at the molecular chain terminals, solely to silicon atoms at non-terminal positions within the molecular chain, or may also be bonded to both these types of silicon atoms. The number of silicon atoms within the organohydrogenpolysiloxane (or the polymerization degree) is preferably within a range from approximately 2 to 300, more preferably from 3 to 200, and still more preferably from 4 to 100. Moreover, the viscosity of the organohydrogenpolysiloxane at 25°C is preferably within a range from 0.5 to 10,000 mPa-s, more preferably from 0.5 to 1,000 mPa·s, and still more preferably from 1 to 300 mPa·s. This viscosity can be measured using a rotational viscometer. The molecular structure of the organohydrogenpolysiloxane may be a linear, cyclic, branched or three dimensional network structure. Conventional materials used as the cross-linking agents within addition reaction-curable silicone rubber compositions can be used as the organohydrogenpolysiloxane. The organohydrogenpolysiloxane may be either a single material or a combination of two or more different materials.

Specific examples of the organohydrogenpolysiloxane include organohydrogenpolysiloxanes represented by an average composition formula (3) shown below:

R⁶ₚHqSiO_{(4-p-q)/2} (3)

(wherein R⁶ represents identical or different unsubstituted or substituted monovalent hydrocarbon groups, p is a positive number that satisfies 0≤p<3 and q is a positive number that satisfies 0<q≤3, provided that p+q is a positive number that satisfies 0<p+q≤3).

In the above average composition formula (3), R⁶ represents identical or different unsubstituted or substituted monovalent hydrocarbon groups, and these groups preferably contain no aliphatic unsaturated bonds. The R⁶ groups preferably contain 1 to 12 carbon atoms, and more preferably 1 to 8 carbon atoms. Specific examples of R⁶ include alkyl groups such as a methyl group, ethyl group or propyl group, cycloalkyl groups such as a cyclohexyl group, aryl groups such as a phenyl group or tolyl group, aralkyl groups such as a benzyl group, 2-phenylethyl group or 2-phenylpropyl group, and groups in which some or all of the hydrogen atoms within the above groups have been substituted with a halogen atom or the like, such as a 3,3,3-trifluoropropyl group.

In the above average composition formula (3), p is a positive number that satisfies 0≤p≤3, preferably satisfies 0.7≤p≤2.4, and more preferably satisfies 1≤p≤2.2. q is a positive number that satisfies 0<q≤3, preferably satisfies 0.002≤q≤1, and more preferably satisfies 0.01≤q≤1. However, the value of p+q is a positive number that satisfies 0<p+q≤3, preferably satisfies 0.8≤p+q≤2.7, and more preferably satisfies 1.002≤p+q≤2.5.

Specific examples of the organohydrogenpolysiloxane include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of dimethylsiloxane and methylhydrogensiloxane with both terminals blocked with trimethylsiloxy groups, dimethylpolysiloxane with both terminals blocked with dimethylhydrogensiloxy groups, methylhydrogenpolysiloxane with both terminals blocked with dimethylhydrogensiloxy groups, copolymers of dimethylsiloxane and methylhydrogensiloxane with both terminals blocked with dimethylhydrogensiloxy groups, copolymers of methylhydrogensiloxane and diphenylsiloxane with both terminals blocked with trimethylsiloxy groups, copolymers of methylhydrogensiloxane, diphenylsiloxane and methylphenylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, dimethylsiloxane and diphenylsiloxane with both terminals blocked with dimethylhydrogensiloxy groups, copolymers of methylhydrogensiloxane, dimethylsiloxane and methylphenylsiloxane with both terminals blocked with dimethylhydrogensiloxy groups, copolymers composed of (CH₃)₂HSiO_{1/2} units, (CH₃)₃SiO_{1/2} units and SiO_{4/2} units, copolymers composed of (CH₃)₂HSiO_{1/2} units and SiO_{4/2} units, copolymers composed of (CH₃)₂HSiO_{1/2} units, SiO_{4/2} units, and (C₆H₅)₃SiO_{1/2} units, and compounds in which some or all of the methyl groups within the compounds listed above have been substituted with other alkyl groups such as propyl groups or butyl groups, with phenyl groups, or with a combination thereof.

The amount added of the organohydrogenpolysiloxane is preferably within a range from 0.1 to 40 parts by mass per 100 parts by mass of the component (A). Moreover, the amount is preferably sufficient to provide 0.5 to 10 SiH groups, and more preferably 0.7 to 5 SiH groups, within the organohydrogenpolysiloxane per aliphatic unsaturated group (such as an alkenyl group or diene group bonded to a silicon atom) within the component (A). Provided the amount of the organohydrogenpolysiloxane added to the composition of the present invention is sufficient to provide an above-mentioned number of SiH groups that satisfies the range from 0.5 to 10, cross-linking tends to proceed satisfactorily, enabling a cured product with satisfactory mechanical strength to be obtained with comparative ease, and any deterioration in the physical properties of the cured product, and particularly any marked deterioration in the heat resistance and compression set characteristics, can be effectively prevented.

### [Other Components]

Besides the components described above, other optional components may be added to the silicone rubber composition of the present invention depending on the intended application of the composition. Examples of these optional components include inorganic fillers other than the reinforcing silica of the component (B), such as diatomaceous earth, fine quartz powder, fused quartz powder, clay, alumina and talc, heat resistance and oil resistance improvers such as red iron oxide, zinc oxide, titanium oxide, cerium oxide, zinc carbonate, magnesium carbonate and magnesium oxide, conductivity-imparting agents such as carbon black, flame retardancy-imparting agents such as iron oxide and halides, as well as softeners, age resistors, ultraviolet absorbers, colorants such as ultramarine, release agents, other additives typically used in silicone compositions, and combinations of two or more of the above components.

### [Production Method]

The silicone rubber composition of the present invention can be obtained by uniformly mixing predetermined amounts of the above components using a rubber mixing device such as a twin roll mill, a kneader, a Banbury mixer, or a dough mixer (kneader). In one preferred production method, the component (A), component (B), component (C), component (D) and optionally any other components are first mixed together, and heating is then performed where necessary, thus preparing a base compound, and the curing agent of the component (E) is then added to this base compound.

### [Applications]

There are no particular limitations on the molding method employed when molding the silicone rubber composition of the present invention. For example, the composition can be molded and cured to a desired shape using common rubber molding methods such as compression molding, transfer molding, injection molding, extrusion molding and calender molding, thus enabling the production of rubber molded items such as sheets, tubes, hoses, O-rings, diaphragms, packing and gaskets.

There are no particular limitations on the curing conditions used when curing the silicone rubber composition of the present invention. The composition is typically cured by heating at 80 to 300°C, and particularly 100 to 250°C, for a period of approximately 5 seconds to 1 hour, and preferably 30 seconds to 30 minutes. Further, post-curing may also be performed at 100 to 200°C for a period of approximately 10 minutes to 10 hours.

### EXAMPLES

The present invention is described in more detail below with reference to a synthesis example and a series of examples and comparative examples, although the present invention is in no way limited by the following examples. In the following description, "parts" refers to "parts by mass".

### [Methods of Measuring Physical Properties]

Physical properties (hardness, tensile strength, breaking elongation and compression set characteristics) were measured using the methods prescribed in JIS K 6249. Specifically, measurements were performed as follows. Each of the compositions obtained in the following examples and comparative examples was subjected to compression molding and curing by heating at 165°C under a pressure of 70 kgf/cm² for 10 minutes, and was then post-cured at 200°C for 4 hours. A sheet-like test piece with a thickness of 2 mm was prepared for measuring the hardness, dumbbell-shaped test pieces prescribed in the above JIS standard were prepared for measuring the tensile strength and the breaking elongation, and a circular cylindrical test piece prescribed in the above JIS standard was prepared for measuring the compression set characteristics. The thus prepared test pieces were then used to measure the physical properties listed above. The results are shown in Table 1. The compression set characteristics shown in Table 1 represent values measured after compression of the test piece for 22 hours at 150°C.

### [Synthesis Example 1]

### - Synthesis of Cyclic Organopolysiloxanesilazane -

A 1 L three-neck separable flask was charged with hexamethylcyclotrisiloxane (222.44 g, 1.0 mol, 1.0 equivalent), dimethyldichlorosilane (135.62 g, 1.05 mol, 1.05 equivalents) and hexamethylphosphoric triamide (174 µL, 0.001 mol), and the resulting mixture was stirred under a nitrogen atmosphere at room temperature for 3 hours. Subsequently, the thus obtained crude product was dissolved in toluene (716 g), the resulting solution was cooled to 5°C using an ice bath, and excess ammonia gas was passed through the solution for a period of 8 hours to effect a reaction. Following completion of the reaction, the reaction solution was stirred for 2 hours at 60°C to volatilize the excess ammonia gas, and the reaction solution was then cooled to room temperature and filtered to remove by-product salts. Subsequently, the solvent and any neutral by-products such as ammonium salts were removed from the filtrate by heating under reduced pressure, yielding a reaction product. GC-MS analysis confirmed that the reaction product was a cyclic organopolysiloxanesilazane represented by a structural formula (4) shown below. The yield was 250.22 g (overall yield: 84.7% by mass).

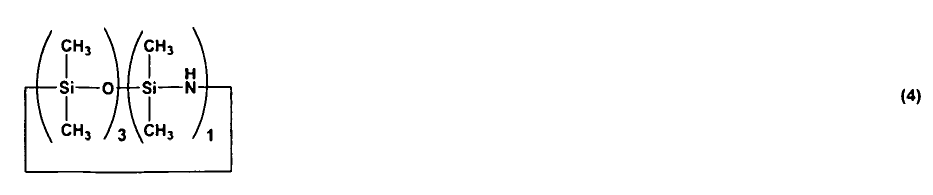

### [Example 1]

100 parts of an organopolysiloxane composed of 99.975 mol% of dimethylsiloxane units and 0.025 mol% of dimethylvinylsiloxane units, with both molecular chain terminals blocked with dimethylvinylsiloxy groups and having an average polymerization degree of approximately 6,000, and 4 parts of the cyclic organopolysiloxanesilazane represented by the above structural formula (4) obtained in Synthesis Example 1 were subjected to preliminary kneading in a kneader, 2 parts of ion-exchanged water and 35 parts of a reinforcing silica having a BET specific surface area of 200 m²/g (product name: Aerosil 200, a fumed silica manufactured by Nippon Aerosil Co., Ltd.) were then added to the mixture, and kneading was continued while the mixture was heated for 2 hours at 170°C, yielding a compound 1. 0.4 parts of 2,5-dimethyl-2,5-bis(t-butylperoxy)hexane was then added as a cross-linker to 100 parts of the compound 1, and the resulting mixture was mixed uniformly to obtain a silicone rubber composition.

### [Example 2]

With the exception of replacing the 2 parts of ion-exchanged water and 35 parts of reinforcing silica having a BET specific surface area of 200 m²/g from Example 1 with 37 parts of a reinforcing silica with a BET specific surface area of 200 m²/g (product name: Aerosil 200, a fumed silica manufactured by Nippon Aerosil Co., Ltd.) that had been subjected to preliminary humidity conditioning under saturated water vapor conditions at 50°C for three days to adjust the moisture content of the silica to 6% by mass (equivalent to 35 parts of the reinforcing silica and 2 parts of water), a compound 2 was prepared in the same manner as Example 1. With the exception of then using this compound 2 instead of the compound 1, a silicone rubber composition was obtained in the same manner as Example 1.

### [Comparative Example 1]

100 parts of an organopolysiloxane composed of 99.975 mol% of dimethylsiloxane units and 0.025 mol% of dimethylvinylsiloxane units, with both molecular chain terminals blocked with dimethylvinylsiloxy groups and having an average polymerization degree of approximately 6,000, 4 parts of a dimethylpolysiloxane having silanol groups at both terminals, an average polymerization degree of 3.5 and a viscosity at 25°C of 12.9 mm²/s as a dispersant, and 35 parts of a reinforcing silica having a BET specific surface area of 200 m²/g (product name: Aerosil 200, a fumed silica manufactured by Nippon Aerosil Co., Ltd.) were kneaded in a kneader while the mixture was heated for 2 hours at 170°C, yielding a compound 3. With the exception of then using this compound 3 instead of the compound 1, a silicone rubber composition was obtained in the same manner as Example 1.

### [Comparative Example 2]

With the exception of not adding the 2 parts of ion-exchanged water in Example 1, kneading was performed in the same manner as Example 1, but the reinforcing silica was not able to be dispersed uniformly. Accordingly, a silicone rubber composition was not able to be obtained in Comparative Example 2, and therefore no physical properties were measured.

### [Comparative Example 3]

100 parts of an organopolysiloxane composed of 99.975 mol% of dimethylsiloxane units and 0.025 mol% of dimethylvinylsiloxane units, with both molecular chain terminals blocked with dimethylvinylsiloxy groups and having an average polymerization degree of approximately 6,000, 4 parts of hexamethyldisilazane as a dispersant, 2 parts of ion-exchanged water, and 35 parts of a reinforcing silica having a BET specific surface area of 200 m²/g (product name: Aerosil 200, a fumed silica manufactured by Nippon Aerosil Co., Ltd.) were kneaded in a kneader while the mixture was heated for 2 hours at 170°C, yielding a compound 4. With the exception of then using this compound 4 instead of the compound 1, a silicone rubber composition was obtained in the same manner as Example 1.

**[Table 1]**

| | Example 1 | Example 2 | Comparative example 1 | Comparative example 3 |
|---|---|---|---|---|
| Hardness (durometer A) | 40 | 39 | 46 | 42 |
| Tensile strength (MPa) | 8.3 | 8.5 | 9.4 | 7.9 |
| Breaking elongation (%) | 640 | 660 | 570 | 470 |
| Compression set characteristics (%) 150°C, 22 hours | 4 | 4 | 11 | 11 |

As is evident from the results shown in Table 1, by combining the cyclic organopolysiloxanesilazane of the component (C) with the water of the component (D), a silicone rubber composition can be obtained that yields a cured product having compression set characteristics that are considerably superior to those of cured products of silicone rubber compositions that employ a conventional dispersant such as an organopolysiloxane with both terminals blocked with silanol groups or hexamethyldisilazane.

## Claims

1. A silicone rubber composition comprising:
(A) 100 parts by mass of an organopolysiloxane with a polymerization degree of not less than 100, represented by an average composition formula (1) shown below:
R¹ₐSiO_{(4-a)/2} (1)
wherein R¹ represents identical or different unsubstituted or substituted monovalent hydrocarbon groups, and a represents a positive number within a range from 1.95 to 2.05,
(B) 3 to 70 parts by mass of a reinforcing silica having a BET specific surface area of not less than 50 m²/g,
(C) a cyclic organopolysiloxanesilazane represented by general formula (2) shown below: 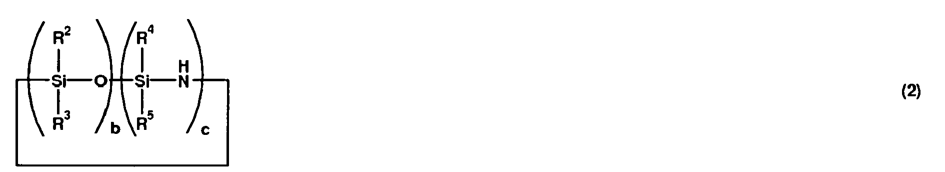 wherein R² to R⁵ each independently represents an unsubstituted or substituted monovalent hydrocarbon group of 1 to 8 carbon atoms, b is an integer of 1 to 100, and c is an integer of 1 to 100, although the (R²R³SiO) units and (R⁴R^{S}SiNH) units may be arranged randomly, and b+c is an integer of 3 to 200,
(D) water, and
(E) a curing agent.

2. The silicone rubber composition according to Claim 1, wherein the curing agent of component (E) is: (E1) an organic peroxide, (E2) a combination of an organohydrogenpolysiloxane and a hydrosilylation catalyst, or (E3) a combination of a component (E1) and a component (E2).

3. The silicone rubber composition according to Claim 1 or 2, wherein the organopolysiloxane of component (A) contains two or more aliphatic unsaturated groups within each molecule.

4. A cured product obtained by curing the silicone rubber composition defined in any one of Claims 1 to 3.

5. A method of reducing compression set of a cured product of a silicone rubber composition comprising:
(A) 100 parts by mass of an organopolysiloxane with a polymerization degree of not less than 100, represented by an average composition formula (1) shown below:
R¹ₐSiO_{(4-a)/2} (1)
wherein R¹ represents identical or different unsubstituted or substituted monovalent hydrocarbon groups, and a represents a positive number within a range from 1.95 to 2.05,
(B) 3 to 70 parts by mass of a reinforcing silica having a BET specific surface area of not less than 50 m²/g, and
(E) a curing agent,
the method comprising preparing and curing a silicone rubber composition comprising:
the components (A), (B) and (E), and also comprising:
(C) a cyclic organopolysiloxanesilazane represented by general formula (2) shown below: 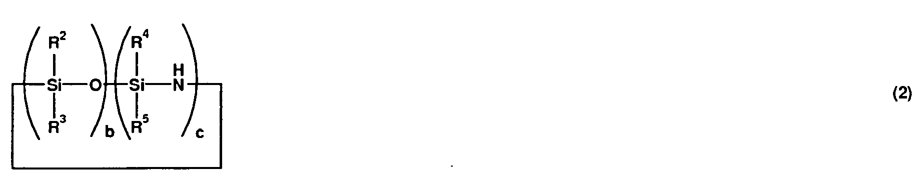 wherein R² to R⁵ each independently represents an unsubstituted or substituted monovalent hydrocarbon group of 1 to 8 carbon atoms, b is an integer of 1 to 100, and c is an integer of 1 to 100, although the (R²R³SiO) units and (R⁴R⁵SiNH) units may be arranged randomly and b+c is an integer of 3 to 200, and
(D) water.

6. The method according to Claim 5, wherein the curing agent of component (E) is: (E1) an organic peroxide, (E2) a combination of an organohydrogenpolysiloxane and a hydrosilylation catalyst, or (E3) a combination of a component (E1) and a component (E2).

7. The method according to Claim 5 or 6, wherein the organopolysiloxane of component (A) contains two or more aliphatic unsaturated groups within each molecule.

8. Use of:
(C) a cyclic organopolysiloxanesilazane represented by general formula (2) shown below: 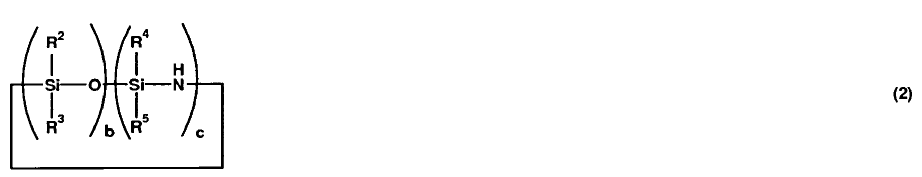 wherein R² to R⁵ each independently represents an unsubstituted or substituted monovalent hydrocarbon group of 1 to 8 carbon atoms, b is an integer of 1 to 100, and c is an integer of 1 to 100, although the (R²R³SiO) units and (R⁴R^{S}SiNH) units may be arranged randomly and b+c is an integer of 3 to 200, and
(D) water
for reducing compression set of a cured product of a silicone rubber composition comprising:
(A) 100 parts by mass of an organopolysiloxane with a polymerization degree of not less than 100, represented by an average composition formula (1) shown below:
R¹ₐSiO_{(4-a)/2} (1)
wherein R¹ represents identical or different unsubstituted or substituted monovalent hydrocarbon groups, and a represents a positive number within a range from 1.95 to 2.05,
(B) 3 to 70 parts by mass of a reinforcing silica having a BET specific surface area of not less than 50 m²/g, and
(E) a curing agent.

9. The use according to Claim 8, wherein the curing agent of component (E) is: (E1) an organic peroxide, (E2) a combination of an organohydrogenpolysiloxane and a hydrosilylation catalyst, or (E3) a combination of a component (E1) and a component (E2).

10. The use according to Claim 8 or 9, wherein the organopolysiloxane of component (A) contains two or more aliphatic unsaturated groups within each molecule.
